(19) Europäisches Patentamt
European Patent Office
Office européen des brevets

(11) **EP 3 992 233 A1**

(12) **EUROPEAN PATENT APPLICATION**

(43) Date of publication:
**04.05.2022 Bulletin 2022/18**

(21) Application number: **20204878.1**

(22) Date of filing: **30.10.2020**

(51) International Patent Classification (IPC):
**C08J 9/12** (2006.01)     **C08F 290/04** (2006.01)
**C09J 7/26** (2018.01)     **C09J 7/38** (2018.01)
**C09J 133/06** (2006.01)     **C09J 151/06** (2006.01)

(52) Cooperative Patent Classification (CPC):
(C-Sets available)
**C08J 9/122; C08F 290/044; C09J 155/005;**
C08J 2203/06; C08J 2203/08; C08J 2325/08;
C08J 2333/06     (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **3M Innovative Properties Company**
**Saint Paul, MN 55133-3427 (US)**

(72) Inventors:
• **KEMPF, Michael**
  **41453 Neuss (DE)**

• **APELDORN, Thomas**
  **41453 Neuss (DE)**
• **D'HOLLANDER, Stijn**
  **2070 Zwijndrecht (BE)**
• **GIESE, Maja**
  **41453 Neuss (DE)**
• **MOOS, Martin Jürgen**
  **41453 Neuss (DE)**
• **BRUECKMANN, Nadine**
  **41453 Neuss (DE)**

(74) Representative: **Mathys & Squire**
**Theatinerstraße 7**
**80333 München (DE)**

(54) **FOAMABLE PRECURSOR OF A MICROCELLULAR FOAMED POLYMERIC COMPOSITION**

(57)     A foamable precursor of a microcellular foamed polymeric composition, wherein the foamable precursor comprises:

a) the graft copolymerization reaction product of a copolymerizable monomer mixture comprising:

i. at least one (meth)acrylate comonomer; and

ii. at least one copolymerizable macromonomer comprising an oligomeric backbone selected from the group consisting of thermoplastic oligomeric material having a Vicat softening temperature greater than 20°C, when measured according to test method ASTM D1525-09, wherein the copolymerizable macromonomer further comprises a copolymerizable ethylenically unsaturated functional group at one terminal position of the oligomeric backbone; and

b) optionally, a physical foaming agent.

*Fig. 1*

**(Cont. next page)**

EP 3 992 233 A1

(52) Cooperative Patent Classification (CPC): (Cont.)

C-Sets
**C08F 290/044, C08F 220/06, C08F 220/1808**

## Description

## Technical Field

The present disclosure relates generally to the field of foamed polymeric compositions, more specifically to the field of microcellular foamed adhesive compositions. The present disclosure also relates to a process of manufacturing such microcellular foamed polymeric compositions and to uses of such foamed polymeric compositions.

## Background

Foamed polymeric compositions have been known for quite some time and have been used for various applications including mechanical buffering, such as shock absorption and vibration damping, as well as compliance to irregular substrates. Partly due to these beneficial properties, foamed polymeric compositions have been increasingly used for the manufacturing of foam tapes, in particular pressure-sensitive adhesive foam tapes. As applications for foam tapes have increased substantially in recent years, performance requirements have become increasingly demanding. Polymeric foams are used for example as attachment devices for a wide variety of assembly and manufacturing applications, such as interior or exterior automotive mounting of panels and moldings.

In addition to increasing performance requirements for polymeric foam tapes, volatile organic compounds (VOC) reduction regulations are becoming increasingly important in particular for various kinds of interior applications (occupational hygiene and occupational safety) such as e.g. in the construction market or in the automotive or electronics industries.

The reduction of organic solvent usage in the manufacturing process of polymeric foam tapes has quickly emerged as one straightforward means to reduce the overall VOC levels. The use of specific scavengers for organic contaminants, as described in WO 01/44400 (Yang), is another alternative way to achieve reduced VOC levels. However, these solutions for reducing overall VOC levels are often associated with increased manufacturing complexity and production costs. Also, the overall VOC levels observed often do not fulfill the requirements for various kinds of interior applications such as e.g. in the construction market or in the automotive or electronics industries. Another alternative solution known in the art involves using specific rubber-based polymeric material, as described e.g. in US-A1-2016145406 (Bieber et al.). The disclosed solution typically suffers from lack of versatility and formulation flexibility.

(Meth)acrylate-based (co)polymers still remain polymers of choice for the manufacturing of polymeric foams due to their advantageous intrinsic properties. In that context, the most common method for foaming acrylate-based polymeric compositions, in particular acrylate-based pressure sensitive adhesive polymeric compositions, involves using expandable microspheres, as described e.g. in US-A1-2011/0281964 (Zmarsly et al.). These expandable microspheres typically comprise low molecular weight organic materials or residuals qualifying as VOC, which therefore contributes to increase the overall VOC content of the polymeric foam. Moreover, the use of expandable microspheres is known to introduce substantial limitations in terms of reducing density and foam cell size in the corresponding polymeric foam, and to be associated with increased manufacturing and processing complexity.

## Summary

Without contesting the technical advantages associated with the foamed polymeric compositions known in the art, there is still a need for a foamable precursor of a stable microcellular foamed polymeric composition provided with advantageous microstructure characteristics and mechanical performance attributes, as well as with excellent overall VOC reduction characteristics.

According to one aspect, the present disclosure relates to a foamable precursor of a microcellular foamed polymeric composition, wherein the foamable precursor comprises:

a) the graft copolymerization reaction product of a copolymerizable monomer mixture comprising:

i. at least one (meth)acrylate comonomer; and
ii. at least one copolymerizable macromonomer comprising an oligomeric backbone selected from the group consisting of thermoplastic oligomeric material having a Vicat softening temperature greater than 20°C, when measured according to test method ASTM D1525-09, wherein the copolymerizable macromonomer further comprises a copolymerizable ethylenically unsaturated functional group at one terminal position of the oligomeric backbone; and

b) optionally, a physical foaming agent.

In another aspect, the present disclosure is directed to a process of manufacturing a microcellular foamed polymeric composition, comprising the steps of:

a) providing a foamable precursor of a microcellular foamed polymeric composition as described above;
b) optionally, providing a physical foaming agent as described above;
c) allowing the physical foaming agent to foam the foamable precursor of a microcellular foamed polymeric composition, thereby obtaining a microcellular foamed polymeric composition; and
d) optionally, crosslinking the microcellular foamed polymeric composition.

According to still another aspect, the present disclosure relates to a microcellular foamed polymeric composition obtained from the process as described above.

In yet another aspect, the present disclosure is directed to the use of a foamable precursor of a microcellular foamed polymeric composition or a microcellular foamed polymeric composition as described above for industrial applications, in particular for construction market applications, transportation market applications and electronic applications.

**Brief Description of the Drawings**

FIG. 1 illustrates a schematic side view of an exemplary mixing apparatus for use in the present disclosure.
FIG. 2 is a scanning electron microscope image of a cross section of an exemplary foamed polymeric composition according to one aspect of the present disclosure.

**Detailed description**

According to a first aspect, the present disclosure relates to a foamable precursor of a microcellular foamed polymeric composition, wherein the foamable precursor comprises:

a) the graft (random) copolymerization reaction product of a copolymerizable monomer mixture comprising:

i. at least one (meth)acrylate comonomer; and
ii. at least one copolymerizable macromonomer comprising an oligomeric backbone selected from the group consisting of thermoplastic oligomeric material having a Vicat softening temperature greater than 20°C, when measured according to test method ASTM D1525-09, wherein the copolymerizable macromonomer further comprises a copolymerizable ethylenically unsaturated functional group at one terminal position of the oligomeric backbone; and

b) optionally, a physical foaming agent.

In the context of the present disclosure, it has been surprisingly found that a foamable precursor as described above is outstandingly suitable for forming a microcellular foamed polymeric composition provided with advantageous and stable microstructure characteristics, in particular when subjected to a physical foaming process. The microcellular foamed polymeric composition of the present disclosure is in particular characterized by a (long-term) stability of the foam cell structure and morphology. The microcellular foamed polymeric composition resulting from the physical foaming of the foamable precursor as described above is further characterized by relatively small cell sizes, which makes it particularly suitable for forming relatively thin foamed polymeric layers. In a typical aspect of the microcellular foamed polymeric composition, the average cell size no greater than 100 micrometers, no greater than 50 micrometers, or even no greater than 10 micrometers. The microcellular foamed polymeric composition of the disclosure is further characterized by relatively high cell density and relatively low foam density characteristics.

Besides the advantageous microstructure characteristics, the microcellular foamed polymeric composition of the present disclosure is further characterized with excellent mechanical performance attributes, in particular advantageous elongation and compressibility characteristics, as well as excellent stress relaxation properties. Microcellular polymer foams typically provide further unique properties, such as e.g. higher impact strength, toughness and thermal stability, as well as lower dielectric constant and thermal conductivity, when compared to conventional foams.

The microcellular foamed polymeric compositions according to the present disclosure are further characterized by providing relatively low VOC levels, typically less than 2000 ppm, less than 1500 ppm, or even less 1000 ppm when measured by thermal desorption analysis according to test method VDA278. In some advantageous aspects of the disclosure, the microcellular foamed polymeric compositions as described herein are characterized by low or even substantial absence of perceptible odor.

As such, the microcellular foamed polymeric compositions resulting from the physical foaming of the foamable precursor as described above are particularly suited for (industrial) interior applications, more in particular for construction market applications, automotive applications or electronic applications. In the context of automotive applications, the microcellular foamed polymeric compositions as described herein may find particular use for adhering e.g. automotive body side mouldings, weather strips or rearview mirrors. Regarding electronic applications, the microcellular foamed polymeric compositions as described herein are particularly suitable for the fixation of display panels in mobile hand-held electronic devices.

Without wishing to be bound by theory, it is believed that the excellent characteristics and performance attributes associated with the microcellular foamed polymeric compositions described herein directly result from the use of the foamable precursor as described above, in particular to the use of a graft (random) copolymerization reaction product of a copolymerizable monomer mixture comprising:

    i. at least one (meth)acrylate comonomer; and
    ii. at least one copolymerizable macromonomer comprising an oligomeric backbone selected from the group consisting of thermoplastic oligomeric material having a Vicat softening temperature greater than 20°C, when measured according to test method ASTM D1525-09, wherein the copolymerizable macromonomer further comprises a copolymerizable ethylenically unsaturated functional group at one terminal position of the oligomeric backbone.

In the context of the present disclosure, it has been surprisingly found that when the two above-mentioned reactive components are contacted under the suitable copolymerization reaction conditions, a graft (or branched) copolymerization reaction product is formed which comprises a (meth)acrylate-based polymeric backbone and a plurality of thermoplastic macromonomers distributed along (meth)acrylate-based polymeric backbone as pendant groups or side-chains of the graft copolymer. It is believed that it is precisely the formation of this graft copolymerization reaction product which leads to the advantageous foamability characteristics as described above and to the advantageous properties of the resulting microcellular foamed polymeric composition.

Still without wishing to be bound by theory, it is postulated that the copolymerizable thermoplastic macromonomers provide structural reinforcement to the graft copolymer, wherein the grafted side-chains have the ability to hinder the chain stretch of the (meth)acrylate-based polymeric backbone during any deformation associated with the foaming process, leading to an increase in viscosity through the so called strain-hardening effect. It is further believed that the increase of the melt-strength of the polymer due to the increase in viscosity results in significantly improved foaming characteristics. In particular, the higher melt strength is believed to suppress the coalescence of cells, reduce the cell rupture an prevent gas from escaping the cells, and this by stabilizing the cell growth in the melt state and by strengthening the cell walls between the gas bubbles, which in turn results into decreased foam cell size, higher cell density, and increased expansion ratio.

Without wishing to be bound by theory still, it is believed that the (meth)acrylate-based polymeric backbone and the grafted thermoplastic side-chains are present in the form of a phase-separated structure, in particular a microphase-separated structure, which is believed to advantageously impact the foamability characteristics and the performance attributes associated with the resulting microcellular foamed polymeric composition.

In the context of the present disclosure, it has been surprisingly found that the incorporation of copolymerizable thermoplastic macromonomers comprising an oligomeric backbone selected from the group consisting of thermoplastic oligomeric material having a Vicat softening temperature greater than 20°C beneficially impacts not only the foamability characteristics of the initial polymeric material, but also the long-term stability of the resulting microcellular foamed polymeric composition. The relatively high affinity between the thermoplastic oligomeric material as described above and the physical foaming agent is also believed to advantageously affect the overall foaming process.

In the context of the present disclosure, the Applicant was faced with the technical challenge of formulating a polymeric precursor suitable for foaming with a physical foaming agent and resulting into a microcellular foamed polymeric composition providing a delicate and somewhat contradicting combination of flexibility (through advantageous mechanical properties) and long-term foam structure stability.

In the context of the present disclosure still, it has been found that the use of a physical foaming agent is particularly beneficial as it provides excellent overall VOC levels reduction performance, and in particular improved VOC levels reduction when compared to using expandable microspheres, which is one of the most commonly known technical solution for foaming polymeric compositions. The use of a physical foaming agent further obviates the need to take specific technical measures and processing precautions to preserve the otherwise sensitive expandable microspheres during the foaming and post-treatment process. Using a physical foaming agent, as opposed to expandable microspheres, is also more advantageous as it allows using further functional fillers which would typically damage the expandable microspheres in conventionally foamed polymeric compositions.

It has been further found that the use of a physical foaming agent specifically provided in supercritical conditions allows higher loading and faster diffusion rate of the physical foaming agent into the (hot melt processable) polymeric precursor composition, when compared to the use of a physical foaming agent in non-supercritical state. Physical foaming agents in supercritical state also provide more homogeneous and stable distribution of the physical foaming agent into the polymeric precursor melt, thereby producing an improved solution of the physical foaming agent.

In some aspects of the disclosure where the (meth)acrylate-based (co)polymeric base component obtainable by (co)polymerizing solely the at least one (meth)acrylate comonomer (i.e. not incorporating the copolymerizable thermoplastic oligomeric macromonomers) has a glass transition temperature (Tg) no greater than 20°C, the advantageous characteristics and performance attributes as described above are particularly unexpected findings considering that this (meth)acrylate-based (co)polymeric material would typically be recognized as unsuitable for forming foamed polymeric compositions having long-term foam structure stability when foamed with a physical foaming agent. This is generally caused by cell instability and cell collapse happening during physical foaming in a (meth)acrylate-based (co)polymeric material which is relatively soft by nature. This excessive softness characteristic of the (meth)acrylate-based (co)polymeric material would have been intuitively expected to detrimentally affect the workability, processability and foaming characteristics of the foamable precursor. The use of a (meth)acrylate-based (co)polymeric base component having a glass transition temperature (Tg) no greater than 20°C, and which may be referred to as a soft polymer, is particularly counterintuitive in that context.

In the context of the present disclosure, the term "microcellular foamed polymeric composition" is meant to designate a polymeric foam material which comprises voids, typically in an amount from 10% to 90% by volume, wherein the voids (such as cells) are formed by a physical foaming agent as described hereinafter and have an average size no greater than 200 micrometers when determined by scanning electron microscopy according to ASTM D3576.

In the context of the present disclosure, the expression "physical foaming agent in supercritical conditions" is meant to refer to those supercritical pressure (Pc) and supercritical temperature (Tc) conditions under which the physical foaming agent, which is typically a gas at ambient temperature (23°C) and pressure (1013 hPa), is compressed to a state where it has the density and solvation characteristics of a liquid, but the viscosity, permeability and diffusivity of a gas. A supercritical physical foaming agent is a single - phase material which exists above a critical point, which point is determined by the supercritical pressure (Pc) and supercritical temperature (Tc), and which values depend on the particular physical foaming agent. As an example, the Tc and Pc values for carbon dioxide are respectively 31°C and 7.4 MPa.

The term "nucleation" is meant to designate a process by which a homogeneous solution of polymeric material and dissolved molecules of a species, that is typically a gas under ambient conditions, undergoes formations of clusters of molecules of the species that define "nucleation sites" from which cells will grow. In other words, the nucleation designates a change from a homogeneous solution to a multi-phase mixture in which, throughout the polymeric material, sites of aggregation of at least several molecules of physical foaming agent are formed.

The expression "polydispersity" is meant to refer to the weight average cell diameter divided by the number average cell diameter.

As used herein, the expression "hot melt processable polymeric composition" is meant to designate a polymer or a blended polymeric material with a melt viscosity profile such that it can be coated on a substrate or carrier in a thin layer at a process temperature significantly above normal room temperature.

The foamable precursor of a microcellular foamed polymeric composition comprises as a first component a graft copolymerization reaction product of a copolymerizable monomer mixture comprising: (i) at least one (meth)acrylate comonomer.

(Meth)acrylate comonomers for use herein are not particularly limited, as long as they are copolymerizable with the oligomeric macromonomer as described above. Suitable (meth)acrylate comonomers for use herein may be easily identified by those skilled in the art, in the light of the present disclosure.

In one advantageous aspect, the (meth)acrylate-based (co)polymeric base component obtainable by (co)polymerizing solely the at least one (meth)acrylate comonomer(s) (i.e. not incorporating the copolymerizable thermoplastic oligomeric macromonomers) has a glass transition temperature (Tg) no greater than 20°C, when measured by Differential Scanning Calorimetry (DSC) according to test method ASTM D3418-15. The use of such (meth)acrylate comonomer(s) are believed to result into microcellular foamed polymeric compositions having improved flexibility characteristics and other advantageous mechanical properties.

In one typical aspect, the (meth)acrylate-based (co)polymeric base component obtainable by (co)polymerizing solely the at least one (meth)acrylate comonomer(s) is an amorphous (co)polymeric component.

In another typical aspect of the disclosure, the (meth)acrylate-based (co)polymeric base component obtainable by (co)polymerizing solely the at least one (meth)acrylate comonomer(s) is a random (co)polymeric component.

In one advantageous aspect, the (meth)acrylate-based (co)polymeric base component obtainable by (co)polymerizing solely the at least one (meth)acrylate comonomer(s) has a glass transition temperature (Tg) no greater than 15°C, no greater than 10°C, no greater than 5°C, no greater than 0°C, no greater than -5°C, no greater than -10°C, no greater than -15°C, no greater than -20°C, no greater than -25°C, or even no greater than -30°C, when measured by DSC according to test method ASTM D3418-15.

In another advantageous aspect, the (meth)acrylate-based (co)polymeric base component for use herein has a glass transition temperature (Tg) greater than -40°C, greater than -35°C, greater than -30°C, greater than -25°C, or even greater than -20°C, when measured by DSC according to test method ASTM D3418-15.

In still another advantageous aspect, the (meth)acrylate-based (co)polymeric base component for use herein has a glass transition temperature (Tg) in a range from -35°C to 20°C, from -35°C to 15°C, from -30°C to 10°C, from -25°C to 10°C, from -25°C to 5°C, from -25°C to 0°C, or even from -20°C to 0°C, when measured by DSC according to test method ASTM D3418-15.

According to still another advantageous aspect, the (meth)acrylate-based (co)polymeric base component obtainable by (co)polymerizing solely the at least one (meth)acrylate comonomer(s) has a weight-average molecular weight ($M_w$) greater than 250.000 g/mol, greater than 300.000 g/mol, greater than 400.000 g/mol, greater than 500.000 g/mol, greater than 600.000 g/mol, greater than 700.000 g/mol, or even greater than 800.000 g/mol. Unless otherwise indicated, the weight-average molecular weight (Mw) of the (meth)acrylate-based (co)polymeric base component for use herein is determined by conventional gel permeation chromatography (GPC) using appropriate techniques well known to those skilled in the art.

According to yet another advantageous aspect of the disclosure, the(meth)acrylate-based (co)polymeric base component obtainable by (co)polymerizing solely the at least one (meth)acrylate comonomer(s) is a hot melt processable polymeric composition.

According to a more advantageous aspect of the disclosure, the (meth)acrylate-based (co)polymeric base component for use herein is selected from the group consisting of thermoplastic polymeric compositions, elastomeric polymeric compositions, and any combinations thereof.

According to a typical aspect of the disclosure, the (meth)acrylate-based (co)polymeric base component for use herein is different from the thermoplastic polymeric material having a Vicat softening temperature greater than 20°C, when measured according to test method ASTM D1525-09.

In one particular aspect, the (meth)acrylate-based (co)polymeric base component for use herein is selected from the group consisting of pressure sensitive adhesive compositions.

In one preferred aspect, the (meth)acrylate-based (co)polymeric base component for use herein comprises the (co)polymerization reaction product of a (co)polymerizable material comprising:

i. $C_1$-$C_{32}$ acrylic acid ester monomer units;
ii. ethylenically unsaturated monomer units which are copolymerizable with monomer units (i); and
iii. optionally, further ethylenically unsaturated monomer units which are copolymerizable with monomer units (i) and/or (ii).

In one typical aspect of the disclosure, the $C_1$-$C_{32}$ (meth)acrylic acid ester monomer units (i) for use herein are selected from the group of $C_1$-$C_{25}$ (meth)acrylic acid ester monomer units, $C_1$-$C_{20}$ (meth)acrylic acid ester monomer units, $C_1$-$C_{18}$ (meth)acrylic acid ester monomer units, $C_2$-$C_{16}$ (meth)acrylic acid ester monomer units, $C_2$-$C_{14}$ (meth)acrylic acid ester monomer units, or even $C_2$-$C_{14}$ (meth)acrylic acid ester monomer units.

In another typical aspect of the disclosure, the $C_1$-$C_{32}$ (meth)acrylic acid ester monomer units (i) are selected from the group of $C_4$-$C_{30}$ (meth)acrylic acid ester monomer units, $C_4$-$C_{14}$ (meth)acrylic acid ester monomer units, or even from the group of $C_4$-$C_9$ (meth)acrylic acid ester monomer units.

In one advantageous aspect, the $C_1$-$C_{32}$ (meth)acrylic acid ester monomer units (i) for use herein are selected from the group consisting of $C_4$-$C_9$ (meth)acrylic acid ester monomer units, preferably from the group consisting of n-butyl acrylate, n-butyl methacrylate, n-pentyl acrylate, n-pentyl methacrylate, n-amyl acrylate, n-hexyl acrylate, hexyl methacrylate, n-heptyl (meth)acrylate, n-octyl acrylate, n-octyl methacrylate, n-nonyl (meth)acrylate, isobutyl (meth)acrylate, isooctyl acrylate, isooctyl methacrylate, 2-ethylhexyl acrylate, 2-ethylhexyl methacrylate, 2-octyl acrylate, and any combinations or mixtures thereof.

In another advantageous aspect, the $C_1$-$C_{32}$ (meth)acrylic acid ester monomer units (i) are selected from the group consisting of isooctyl acrylate, 2-ethylhexyl acrylate, and any combinations or mixtures thereof.

In still another advantageous aspect of the disclosure, the ethylenically unsaturated monomer units (ii) which are copolymerizable with monomer units (i) are selected from the group consisting of acrylic acid, methacrylic acid, itaconic acid, maleic acid, fumaric acid, crotonic acid, aconitic acid, dimethylacrylic acid, beta-acryloyloxypropionic acid, trichloroacrylic acid, vinylacetic acid, vinylphosphonic acid, itaconic acid, maleic anhydride, hydroxyethyl acrylate, hydroxypropyl acrylate, hydroxyethyl methacrylate, hydroxypropyl methacrylate, 6-hydroxyhexyl methacrylate, allyl alcohol, glycidyl acrylate, glycidyl methacrylate, and any combinations or mixtures thereof.

In yet another advantageous aspect of the disclosure, the ethylenically unsaturated monomer units (ii) which are copolymerizable with monomer units (i) are selected from the group consisting of (meth)acrylic acid monomers, in particular acrylic acid monomers, and any combinations or mixtures thereof.

In a typical aspect, the optional further ethylenically unsaturated monomer units (iii) are selected from the group consisting of $C_1$-$C_{18}$ (meth)acrylic acid ester monomer units.

According to an advantageous aspect, the copolymerizable monomer mixture used for producing the graft copolymer comprises from 50 to 98 wt.%, from 55 to 95 wt.%, from 60 to 95 wt.%, from 65 to 95 wt.%, from 70 to 95 wt.%, from 70 to 90 wt.%, from 75 to 90 wt.%, or even from 80 to 90 wt.%, of the at least one (meth)acrylate comonomer(s), wherein the weight percentages are based on the total weight of the copolymerizable monomer mixture.

According to another advantageous aspect, the foamable precursor comprises from 50 to 98 wt.%, from 55 to 95 wt.%, from 60 to 95 wt.%, from 65 to 95 wt.%, from 70 to 95 wt.%, from 70 to 90 wt.%, from 75 to 90 wt.%, or even from 80 to 90 wt.%, of the at least one (meth)acrylate comonomer(s), wherein the weight percentages are based on the total weight of the foamable precursor.

The copolymerizable monomer mixture used for producing the graft copolymer further comprises at least one copolymerizable macromonomer comprising an oligomeric backbone selected from the group consisting of thermoplastic oligomeric material having a Vicat softening temperature greater than 20°C, when measured according to test method ASTM D1525-09, wherein the copolymerizable macromonomer further comprises a copolymerizable ethylenically unsaturated functional group at one terminal position of the oligomeric backbone.

According to one typical aspect of the disclosure, the copolymerizable macromonomer for use herein has the following general formula:

$$X\text{-}(Y)_n\text{-}Z$$

wherein:

X is an ethylenically unsaturated functional group copolymerizable with the at least one (meth)acrylate comonomer;
Y is a divalent linking group;
n is 0 or 1; and
Z is a (monovalent) oligomeric moiety.

According to one advantageous aspect, X is a vinyl group having in particular the following general formula:

$$(R)(H)C\text{=}C(R')\text{-}$$

wherein:
R is in particular H or a COOH group and R' is in particular H or a methyl group.

The double bond between the carbon atoms provides a copolymerizable moiety capable of copolymerizing with the at least one (meth)acrylate comonomer(s) thereby forming a backbone having pendant therefrom the oligomeric moieties.

According to another advantageous aspect, Z is a (monovalent) oligomeric moiety having in particular a glass transition temperature (Tg) greater than 20° C and in particular a weight average molecular weight (Mw) in the range from 2.000 to 80.000 g/mol, and being essentially unreactive under copolymerization conditions.

According to still another advantageous aspect, Z the following general formula:

$$\text{-}[\text{-}(R^2)(R^4)C\text{-}CH_2\text{-}]_m\text{-}R^3$$

wherein:

$R^2$ is H or a lower alkyl group;
$R^3$ is a lower alkyl group;
m is an integer from 20 to 500; and
$R^4$ is a monovalent group selected from the group consisting of: phenyl group carrying a $R^5$ substituent and -$CO_2R^6$; wherein $R^5$ is H or a lower alkyl group; and
$R^6$ is a lower alkyl group.

Exemplary copolymerizable macromonomers for use herein are described for example in U.S. Patent No. 4,732,808 (Krampe et al.) the full content of which is incorporated herein by reference.

According to an advantageous aspect of the disclosure, the copolymerizable ethylenically unsaturated functional group present at one terminal position of the oligomeric backbone of the copolymerizable macromonomer is a copolymerizable (meth)acrylate functional group.

Thermoplastic oligomeric materials for use herein are not particularly limited, as long as they meet the above-mentioned Vicat softening temperature requirement. Suitable thermoplastic polymeric materials for use herein may be easily identified by those skilled in the art, in the light of the present disclosure.

In one advantageous aspect, the thermoplastic oligomeric material for use herein has a Vicat softening temperature greater than 25°C, greater than 30°C, greater than 40°C, greater than 50°C, greater than 60°C, greater than 70°C, greater than 80°C, greater than 90°C, greater than 100°C, or even greater than 110°C, when measured according to test method ASTM D1525-09.

In another advantageous aspect, the thermoplastic oligomeric material has a Vicat softening temperature no greater than 200°C, no greater than 180°C, no greater than 160°C, no greater than 150°C, no greater than 140°C, no greater than 130°C, no greater than 120°C, no greater than 110°C, no greater than 100°C, no greater than 90°C, or even no greater than 80°C, when measured according to test method ASTM D1525-09.

In still another advantageous aspect, the thermoplastic oligomeric material has a Vicat softening temperature in a range from 25°C to 180°C, from 25°C to 160°C, from 30°C to 150°C, from 30°C to 140°C, from 40°C to 140°C, from 40°C to 120°C, from 45°C to 110°C, from 45°C to 100°C, from 45°C to 95°C, or even from 50°C to 95°C, when measured according to test method ASTM D1525-09.

In still another advantageous aspect, the thermoplastic oligomeric material has a Vicat softening temperature in a range from 25°C to 110°C, from 30°C to 110°C, from 40°C to 100°C, from 50°C to 100°C, from 60°C to 95°C, from 70°C to 95°C, from 80°C to 95°C, or even from 85°C to 95°C, when measured according to test method ASTM D1525-09.

According to one typical aspect, the thermoplastic oligomeric material for use herein is a hot melt processable oligomeric composition.

According to one advantageous aspect, the thermoplastic oligomeric material is selected from the group consisting of amorphous thermoplastic oligomeric materials, semi-crystalline thermoplastic oligomeric materials, and any combinations or mixtures thereof.

According to another advantageous aspect, the thermoplastic oligomeric material having a Vicat softening temperature greater than 20°C is selected from the group consisting of thermoplastic elastomer oligomeric materials, thermoplastic non-elastomer oligomeric materials, and any combinations or mixtures thereof.

According to still another advantageous aspect, the thermoplastic oligomeric material is selected from the group consisting of thermoplastic random oligomeric materials, thermoplastic block oligomeric materials, and any combinations or mixtures thereof.

According to still another advantageous aspect, the thermoplastic oligomeric material for use herein is selected from the group consisting of polystyrenes, polymethacrylics, alkylene-vinyl acetate copolymers, polycarbonates, rubber-based elastomeric materials, rubber-based non-elastomeric materials, polyacrylonitriles, polyvinyl chlorides, polyvinyl acetates, polyvinyl butyrates, polyvinyl alcohols, acrylonitrile butadiene styrene, alkylene-acrylic acid copolymers, polybutylene terephthalate, polyurethanes, polyesters, polyethers, polyamides, polylactides, polyolefins, polyphenylene oxides, styrenic block copolymers, polyetherimides, epoxy-based polymers, fluorinated polymers, cellulose-based polymers, starch, and any combinations or mixtures thereof.

According to a more advantageous aspect, the thermoplastic oligomeric material is selected from the group consisting of polystyrenes, polymethacrylics, alkylene-vinyl acetate copolymers, rubber-based elastomeric materials, rubber-based non-elastomeric materials, and any combinations or mixtures thereof.

According to a more advantageous aspect, the thermoplastic oligomeric material is selected from the group consisting of polystyrenes; polymethacrylics, in particular polymethylmethacrylate; alkylene-vinyl acetate copolymers, in particular ethylene-vinyl acetate copolymers, and any combinations or mixtures thereof.

According to a particularly preferred aspect, the thermoplastic oligomeric material for use herein is selected from the group consisting of polystyrenes, polymethylmethacrylate, ethylene-vinyl acetate copolymers, and any combinations or mixtures thereof.

According to a very preferred aspect, the thermoplastic oligomeric material for use herein is selected to comprise polystyrene.

In a particular aspect of the present disclosure, the thermoplastic oligomeric material for use herein, in particular an amorphous thermoplastic oligomeric material, has a glass transition temperature (Tg) greater than 25°C, greater than 30°C, greater than 40°C, greater than 50°C, greater than 60°C, greater than 70°C, greater than 80°C, greater than 90°C, or even greater than 100°C, when measured by DSC according to test method ASTM D3418-15.

In another particular aspect of the present disclosure, the thermoplastic oligomeric material for use herein, in particular an amorphous thermoplastic oligomeric material, has a glass transition temperature (Tg) no greater than 200°C, no greater than 180°C, no greater than 160°C, no greater than 150°C, no greater than 140°C, no greater than 130°C, no greater than 120°C, or even no greater than 110°C, when measured by DSC according to test method ASTM D3418-15.

In still another particular aspect of the present disclosure, the thermoplastic oligomeric material for use herein, in particular an amorphous thermoplastic oligomeric material, has a glass transition temperature (Tg) in a range from 25°C to 180°C, from 30°C to 150°C, from 40°C to 140°C, from 50°C to 130°C, from 60°C to 120°C, from 80°C to 110°C, or even from 90°C to 110°C, when measured by DSC according to test method ASTM D3418-15.

In an alternative particular aspect, the thermoplastic oligomeric material, in particular a semi-crystalline thermoplastic oligomeric material, has a melting temperature (Tm) greater than 25°C, greater than 30°C, greater than 40°C, greater than 50°C, greater than 60°C, greater than 70°C, greater than 80°C, greater than 90°C, greater than 100°C, greater than 110°C, or even greater than 120°C, when measured by DSC according to test method ASTM D3418-15.

In another particular aspect, the thermoplastic oligomeric material, in particular a semi-crystalline thermoplastic oligomeric material, has a melting temperature (Tm) no greater than 200°C, no greater than 180°C, no greater than 160°C, no greater than 140°C, no greater than 120°C, no greater than 100°C, or even no greater than 80°C, when measured by DSC according to test method ASTM D3418-15.

In still another particular aspect of the present disclosure, the thermoplastic oligomeric material, in particular a semi-crystalline thermoplastic oligomeric material, has a melting temperature (Tm) in a range from 25°C to 180°C, from 30°C to 160°C, from 40°C to 140°C, from 50°C to 120°C, from 50°C to 100°C, from 60°C to 100°C, or even from 60°C to 90°C, when measured by DSC according to test method ASTM D3418-15.

According to an exemplary aspect of the disclosure, the copolymerizable macromonomer comprising an oligomeric backbone for use herein has a weight-average molecular weight ($M_w$) greater than 2000 g/mol, greater than 5000 g/mol, greater than 10.000 g/mol, greater than 20.000 g/mol, greater than 30.000 g/mol, greater than 40.000 g/mol, greater than 50.000 g/mol, or even greater than 60.000 g/mol. Unless otherwise indicated, the weight-average molecular weight ($M_w$) of the copolymerizable macromonomer for use herein is determined by conventional gel permeation chromatography (GPC) using appropriate techniques well known to those skilled in the art.

According to another exemplary aspect of the disclosure, the copolymerizable macromonomer for use herein has a weight-average molecular weight ($M_w$) no greater than 100.000 g/mol, no greater than 80.000 g/mol, no greater than 70.000 g/mol, no greater than 60.000 g/mol, no greater than 50.000 g/mol, no greater than 40.000 g/mol, no greater than 30.000 g/mol, or even no greater than 20.000 g/mol.

According to still another exemplary aspect of the disclosure, the copolymerizable macromonomer for use herein has a weight-average molecular weight ($M_w$) in a range from 2000 to 100.000 g/mol, from 3000 to 80.000 g/mol, from 5000 to 60.000 g/mol, from 5000 to 50.000 g/mol, from 5000 to 40.000 g/mol, from 10.000 to 40.000 g/mol, from 10.000 to 30.000 g/mol, from 10.000 to 25.000 g/mol, or even from 10.000 to 20.000 g/mol.

According to an advantageous aspect, the copolymerizable monomer mixture used for producing the graft copolymer comprises from 1 to 50 wt.%, from 2 to 50 wt.%, from 2 to 45 wt.%, from 5 to 45 wt.%, from 5 to 40 wt.%, from 5 to 35 wt.%, from 5 to 30 wt.%, from 5 to 25 wt.%, from 5 to 20 wt.%, or even from 5 to 15 wt.%, of the at least one copolymerizable macromonomer(s), wherein the weight percentages are based on the total weight of the copolymerizable monomer mixture.

According to another advantageous aspect of the disclosure, the foamable precursor comprises from 1 to 50 wt.%, from 2 to 50 wt.%, from 2 to 45 wt.%, from 5 to 45 wt.%, from 5 to 40 wt.%, from 5 to 35 wt.%, from 5 to 30 wt.%, from 5 to 25 wt.%, from 5 to 20 wt.%, or even from 5 to 15 wt.%, of the at least one copolymerizable macromonomer(s), wherein the weight percentages are based on the total weight of the foamable precursor.

According to still another advantageous aspect, the copolymerizable monomer mixture used for producing the graft copolymer comprises:

a) from 50 to 98 wt.%, from 55 to 95 wt.%, from 60 to 95 wt.%, from 65 to 95 wt.%, from 70 to 95 wt.%, from 70 to 90 wt.%, from 75 to 90 wt.%, or even from 80 to 90 wt.%, of the at least one (meth)acrylate comonomer(s); and
b) from 1 to 50 wt.%, from 2 to 50 wt.%, from 2 to 45 wt.%, from 5 to 45 wt.%, from 5 to 40 wt.%, from 5 to 35 wt.%, from 5 to 30 wt.%, from 5 to 25 wt.%, from 5 to 20 wt.%, from 5 to 15 wt.%, or even from 8 to 15 wt.% of the at least one copolymerizable macromonomer(s);

wherein the weight percentages are based on the total weight of the copolymerizable monomer mixture.

According to one advantageous aspect, the foamable precursor of the disclosure may further comprise a thermoplastic polymeric material having a Vicat softening temperature greater than 20°C, when measured according to test method ASTM D1525-09.

In the context of the present disclosure, it has been found that the use of a thermoplastic polymeric material having a Vicat softening temperature greater than 20°C in the foamable precursor of a microcellular foamed polymeric composition, may not only advantageously affect the microcellular structure of the foamed polymeric compositions, but also improves its mechanical properties, in particular its compressibility characteristics.

In one typical aspect, the thermoplastic polymeric material for use herein is as described above wit respect to the thermoplastic oligomeric material.

In one exemplary aspect, the thermoplastic polymeric material for use herein has a weight-average molecular weight ($M_w$) in a range from 5.000 to 800.000 g/mol, from 5.000 to 600.000 g/mol, from 10.000 to 600.000 g/mol, from 50.000 to 500.000 g/mol, from 100.000 to 500.000 g/mol, from 150.000 to 500.000 g/mol, from 200.000 to 500.000 g/mol, or even from 200.000 to 400.000 g/mol. Unless otherwise indicated, the weight-average molecular weight ($M_w$) of the thermoplastic polymeric material for use herein is determined by conventional gel permeation chromatography (GPC) using appropriate techniques well known to those skilled in the art.

According to a typical aspect of the disclosure, the foamable precursor comprises from 0 to 50 wt.%, from 1 to 50 wt.%, from 5 to 50 wt.%, from 5 to 45 wt.%, from 10 to 45 wt.%, or even from 15 to 45 wt.%, of a thermoplastic polymeric material, wherein the weight percentages are based on the total weight of the foamable precursor.

In one particular aspect of the disclosure, the foamable precursor of a microcellular foamed polymeric composition comprises a physical foaming agent.

Physical foaming agents for use herein are not particularly limited. Any physical foaming agents commonly known in the art may be formally used in the context of the present disclosure. Suitable physical foaming agents for use herein may be easily identified by those skilled in the art, in the light of the present disclosure.

In an advantageous aspect of the present disclosure, the physical foaming agent for use herein is selected from the group consisting of carbon dioxide, nitrogen, SF6, nitrous oxide, perfluorinated fluids, hydrofluorocarbons, hydrochlorofluorocarbons, hydrocarbons (such as e.g. heptane, pentane), argon, helium, noble gases, air (nitrogen and oxygen blend), and any combinations or mixtures thereof.

In a more advantageous aspect, the physical foaming agent for use herein is selected from the group consisting of carbon dioxide, nitrogen, air, and any combinations or mixtures thereof.

According to a preferred aspect of the disclosure, the physical foaming agent for use herein is selected to comprise carbon dioxide. More preferably, the physical foaming agent for use herein consists (essentially) of carbon dioxide.

According to one particular aspect, the physical foaming agent for use herein is produced in situ by the decomposition of a chemical blowing agent. Advantageously, the chemical blowing agent for use herein is selected from the group consisting of carbonate / acid blends, azodicarbonamide, and any combinations or mixtures thereof. More advantageously, the chemical blowing agent for use herein is selected to comprise sodium bicarbonate and citric acid blends.

In one preferred aspect of the disclosure, the physical foaming agent for use herein is present in the precursor in supercritical conditions, in particular in pressure and temperature conditions greater than the supercritical pressure (Pc) and the supercritical temperature (Tc) conditions for the physical foaming agent.

In an alternative aspect of the disclosure, the physical foaming agent for use herein is present in the precursor below supercritical conditions, in particular in pressure and temperature conditions below the supercritical pressure (Pc) and the supercritical temperature (Tc) conditions for the physical foaming agent.

In a typical aspect, the foamable precursor of the present disclosure comprises from 0 to 5 wt.%, from 0.01 to 5 wt.%, from 0.05 to 5 wt.%, from 0.1 to 5 wt.%, from 0.1 to 4 wt.%, from 0.1 to 3 wt.%, from 0.2 to 3 wt.%, from 0.5 to 3 wt.%, from 0.5 to 2.5 wt.%, or even from 0.5 to 2 wt.%, of the physical foaming agent, wherein the weight percentages are based on the total weight of the foamable precursor.

According to an advantageous execution, the foamable precursor of the present disclosure comprises:

> a) from 50 to 99 wt.%, from 50 to 98 wt.%, from 55 to 95 wt.%, from 60 to 95 wt.%, from 65 to 95 wt.%, from 70 to 95 wt.%, from 75 to 95 wt.%, from 80 to 95 wt.%, or even from 85 to 95 wt.%, of the graft (random) copolymerization reaction product; and
> b) optionally, from 0 to 5 wt.%, from 0.01 to 5 wt.%, from 0.05 to 5 wt.%, from 0.1 to 5 wt.%, from 0.1 to 4 wt.%, from 0.1 to 3 wt.%, from 0.2 to 3 wt.%, from 0.5 to 3 wt.%, from 0.5 to 2.5 wt.%, or even from 0.5 to 2 wt.%, of the physical foaming agent;
> c) optionally, from 0 to 20 wt.%, from 0.5 to 15 wt.%, from 0.5 to 10 wt.%, from 1 to 10 wt.%, from 1 to 8 wt.%, from 2 to 8 wt.%, or even from 2 to 6 wt.%, of a nucleating agent; and
> d) optionally, from 0 to 50 wt.%, from 1 to 50 wt.%, from 5 to 50 wt.%, from 5 to 45 wt.%, from 10 to 45 wt.%, or even from 15 to 45 wt.%, of a thermoplastic polymeric material;

wherein the weight percentages are based on the total weight of the foamable precursor.

According to a particular execution, the foamable precursor of the present disclosure is a foamable precursor of a microcellular pressure sensitive adhesive foamed polymeric composition.

In another aspect, the present disclosure is directed to a process of manufacturing a microcellular foamed polymeric composition, comprising the steps of:

> a) providing a foamable precursor of a microcellular foamed polymeric composition as described above;
> b) optionally, providing a physical foaming agent as described above;
> c) allowing the physical foaming agent to foam the foamable precursor of a microcellular foamed polymeric composition, thereby obtaining a microcellular foamed polymeric composition; and

d) optionally, crosslinking the microcellular foamed polymeric composition.

In an advantageous aspect, this process comprises the steps of:

a) providing a mixing apparatus;
b) incorporating and mixing the foamable precursor composition in the mixing apparatus;
c) optionally, subjecting the foamable precursor to a heating step;
d) optionally, subjecting the foamable precursor to a devolatilization step;
e) removing the foamable precursor from the mixing apparatus;
f) optionally, shaping the foamable precursor of a microcellular foamed polymeric composition, thereby forming a shaped foamable precursor of a microcellular foamed polymeric composition;
g) incorporating the (shaped) foamable precursor of a microcellular foamed polymeric composition into a reactor;
h) optionally, subjecting the (shaped) foamable precursor to a heating step and/or to a pressurizing step;
i) optionally, incorporating the physical foaming agent into the reactor;
j) allowing the physical foaming agent to foam the (shaped) foamable precursor of a microcellular foamed polymeric composition, thereby obtaining a microcellular foamed polymeric composition; and
k) optionally, crosslinking the microcellular foamed polymeric composition.

In another advantageous aspect, this process comprises the steps of subjecting the foamable precursor to any of devolatilization steps or (melt) degassing steps, in particular using entrainers or vacuum, VOC scavengers, solvent concentration steps, solvent stripping-off steps, solvent recycling steps, steam distillation steps, solvent distillation steps, and any combinations thereof.

In an advantageous aspect of the process of manufacturing a microcellular foamed polymeric composition, the process is continuous and comprises the steps of:

a) providing a mixing apparatus;
b) incorporating and mixing the foamable precursor composition in the mixing apparatus;
c) optionally, degassing the foamable precursor composition, in particular while the foamable precursor composition is still in the mixing apparatus;
d) optionally, exposing the foamable precursor composition to increased pressure and temperature conditions, in particular to pressure and temperature conditions greater than the supercritical pressure ($P_c$) and the supercritical temperature ($T_c$) conditions for the physical foaming agent;
e) optionally, providing the physical foaming agent into the mixing apparatus;
f) mixing the foamable precursor composition and the physical foaming agent (provided in supercritical conditions) in the mixing apparatus;
g) optionally, reducing the pressure and/or temperature conditions of the foamable precursor composition, whereby the pressure and temperature conditions are still greater than the supercritical pressure ($P_c$) and the supercritical temperature ($T_c$) conditions for the physical foaming agent;
h) allowing the physical foaming agent to foam the foamable precursor of a microcellular foamed polymeric composition, in particular by exposing the foamable precursor composition to a reduced pressure (in particular atmospheric pressure), whereby the physical foaming agent expands resulting in foaming of the foamable precursor of the microcellular foamed polymeric composition, and thereby obtaining a microcellular foamed polymeric composition; and
i) optionally, crosslinking the microcellular foamed polymeric composition.

In a further advantageous aspect of the process of manufacturing a microcellular foamed polymeric composition, the foamable precursor for use herein is a hot melt processable polymeric composition.
Mixing apparatus for use herein are not particularly limited. Any mixing apparatus comprising a reaction chamber and commonly known in the art may be used in the context of the present disclosure. Suitable mixing apparatus for use herein may be easily identified by those skilled in the art in the light of the present disclosure.
According to an advantageous aspect of the present disclosure, the mixing apparatus for use herein is a hot melt mixing apparatus.
According to a more advantageous aspect of the process, the mixing apparatus for use herein comprises an extrusion apparatus which is in particular selected from the group of single- and multi-screw extruders, static- and dynamic-mixers, and any combinations thereof.
According to a preferred aspect, the extrusion apparatus for use herein is selected from the group consisting of single screw extruders, twin screw extruders, planetary roller extruders, ring extruders, and any combinations thereof.
According to a more preferred aspect, the extrusion apparatus for use herein is selected from the group consisting of co-rotating multi-screw extruders, counter-rotating multi-screw extruders, and any combinations thereof.

According to one particularly advantageous aspect of the disclosure, the extrusion apparatus is a twin-screw extruder, in particular a co-rotating twin-screw extruder.

According to another particularly advantageous aspect of the disclosure, the extrusion apparatus is a planetary roller extruder comprising in particular a center spindle and multiple planetary gear spindles with center spindle and planetary gear spindles featuring a screw like geometry.

In a typical aspect of the disclosure, the mixing apparatus further comprises a foaming (and shaping) equipment arranged downstream of the extrusion apparatus.

According to this particular execution, the step of allowing the physical foaming agent to foam the foamable precursor of a microcellular foamed polymeric composition is advantageously performed by passing the foamable precursor composition through the foaming (and shaping) equipment and exposing the composition to a reduced pressure in particular atmospheric pressure), whereby the physical foaming agent expands resulting in foaming of the precursor of a foamed polymeric composition, in particular at the time it exits the foaming (and shaping) equipment.

According to a particularly advantageous aspect of the disclosure, the mixing apparatus for use in the process of manufacturing a microcellular foamed polymeric composition comprises:

a) an extrusion apparatus;
b) a melt (gear) pump arranged (directly) downstream of the extrusion apparatus;
c) optionally, a fluid feeding equipment;
d) a static cooling mixer equipment arranged (directly) downstream of the melt pump; and
e) a foaming equipment arranged (directly) downstream of the static cooling mixer equipment.

According to another particularly advantageous aspect of the disclosure, the mixing apparatus for use herein further comprises a fluid (gas) feeding equipment (injection port) which is in particular in fluid connection with the static cooling mixer equipment, more in particular with the static (injection) mixer.

According to another particularly advantageous aspect of the disclosure, the mixing apparatus for use herein further comprises degassing means, in particular vacuum pumps or vacuum degassing units. Advantageously, the degassing means are in fluid connection with the extrusion apparatus, in particular with the downstream section of the extrusion apparatus.

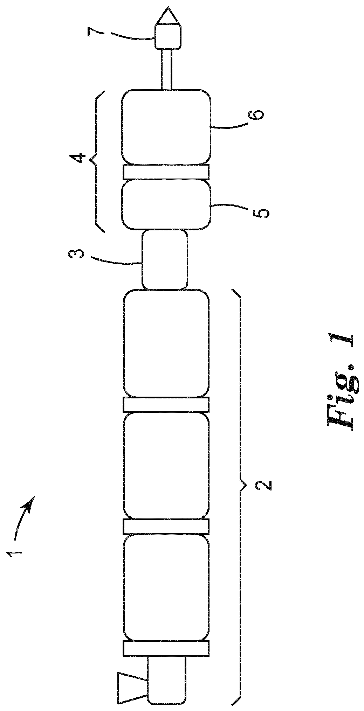

**FIG. 1** illustrates a schematic side view of an exemplary mixing apparatus **1** according to one aspect of the present disclosure, wherein the apparatus comprises a co-rotating twin screw extruder **2,** a melt pump **3** arranged directly downstream of the extruder **2,** a static cooling mixer equipment **4** which is arranged directly downstream of the melt pump **3** and comprising a static mixer **5** and a cooling mixer **6,** and wherein the extrusion apparatus **1** further comprises a foaming equipment **7** arranged directly downstream of the static cooling mixer equipment **4.**

In the context of the present disclosure, it has been surprisingly found that extrusion apparatus as described above is particularly suitable for forming a microcellular foamed polymeric composition provided with excellent characteristics and performance as to overall VOC levels reduction.

Without wishing to be bound by theory, it is believed that the use of the mixing apparatus as described above, in particular the use of the four constituting elements of the apparatus (i.e. the extrusion apparatus, the melt pump, the optional fluid feeding equipment, the static cooling mixer and the foaming equipment) arranged in the very specific sequence as detailed above, advantageously impacts the overall VOC levels reduction characteristics and performance.

In the context of the present disclosure, it has been further surprisingly found that mixing apparatus as described above is outstandingly suitable for the foaming of a polymeric composition with a physical foaming agent which is in particular provided in supercritical conditions of the physical foaming agent.

In a typical aspect of the process of manufacturing a microcellular foamed polymeric composition, the step of mixing the foamable precursor composition and the physical foaming agent in the mixing apparatus is performed in such pressure and temperature conditions sufficient for the physical foaming agent to be uniformly distributed throughout the foamable precursor composition.

In an advantageous aspect, the physical foaming agent is provided and mixed with the foamable precursor composition in supercritical conditions of the physical foaming agent, in particular in pressure and temperature conditions greater than the supercritical pressure ($P_c$) and the supercritical temperature ($T_c$) conditions for the physical foaming agent.

According to a particular aspect of the process, the supercritical pressure ($P_c$) is greater than 6.5 MPa, greater than 7 MPa, greater than 7.5 MPa, greater than 8 MPa, greater than 10 MPa, greater than 12 MPa, greater than 14 MPa, greater than 16 MPa, greater than 18 MPa, greater than 20 MPa, greater than 23 MPa, greater than 25 MPa, or even greater than 28 MPa.

According to more particular aspect, the supercritical pressure ($P_c$) is in a range from 7 to 30 MPa, from 7.5 to 30 MPa, from 8 to 28 MPa, from 10 to 28 MPa, or even from 10 to 26 MPa.

According to another particular aspect of the process of manufacturing a microcellular foamed polymeric composition, the supercritical temperature ($T_c$) is greater than 60°C, greater than 70°C, greater than 80°C, greater than 90°C, greater than 100°C, greater than 120°C, greater than 140°C, greater than 150°C, greater than 160°C, greater than 180°C, greater than 200°C, or even greater than 210°C.

According to still another particular aspect, the supercritical temperature ($T_c$) is no greater than 220°C, no greater than 200°C, no greater than 190°C, no greater than 180°C, no greater than 160°C, no greater than 140°C, or even no greater than 120°C.

According to yet another particular aspect of the disclosure, the supercritical temperature (Tc) is in a range from 65 to 220°C, from 65 to 200°C, from 65 to 180°C, from 65 to 160°C, from 70 to 150°C, from 70 to 140°C, from 80 to 140°C, from 80 to 130°C, or even from 85 to 120°C.

In an advantageous aspect of the process, the step of reducing the pressure and temperature of the foamable precursor composition, whereby the pressure and temperature conditions are still greater than the supercritical pressure ($P_c$) and the supercritical temperature ($T_c$) conditions for the physical foaming agent, is performed such that the reduced temperature is no greater than 220°C, no greater than 200°C, no greater than 190°C, no greater than 180°C, no greater than 160°C, no greater than 150°C, no greater than 140°C, no greater than 120°C, no greater than 100°C, no greater than 90°C, no greater than 80°C, no greater than 70°C, or even no greater than 60°C.

In another advantageous aspect of the process, the step of reducing the pressure and temperature conditions of the foamable precursor composition, whereby the pressure and temperature conditions are still greater than the supercritical pressure ($P_c$) and the supercritical temperature ($T_c$) conditions for the physical foaming agent, is performed such that the reduced pressure is no greater than 20 MPa, no greater than 18 MPa, no greater than 16 MPa, no greater than 14 MPa, no greater than 12 MPa, or even no greater than 10 MPa.

According to a typical aspect of the process, the step of passing the foamable precursor composition through the foaming (and shaping) equipment and exposing the composition to a reduced pressure, is performed at (about) atmospheric pressure (101.3 kPa).

According to another typical aspect of the process, the step of passing the foamable precursor composition through the foaming (and shaping) equipment and exposing the composition to a reduced pressure, is performed at a temperature no greater than 220°C, no greater than 200°C, no greater than 180°C, no greater than 150°C, no greater than 120°C, no greater than 110°C, no greater than 100°C, no greater than 90°C, no greater than 80°C, or even no greater than 60°C.

According to still another typical aspect of the process, the step of passing the foamable precursor composition through the foaming (and shaping) equipment and exposing the composition to a reduced pressure, is performed at a temperature in a range from 30 to 220°C, from 30 to 200°C, from 30 to 180°C, from 30 to 160°C, from 30 to 150°C, from 30 to 140°C, from 30 to 120°C, from 30 to 110°C, from 40 to 100°C, from 50 to 100°C, from 60 to 100°C, from 60 to 95°C, from 70 to 95°C, or even from 70 to 90°C.

According to yet another typical aspect of the process, the step of passing the foamable precursor composition through the foaming (and shaping) equipment and exposing the composition to a reduced pressure causes nucleation of the physical foaming agent and cell formation within the foamable precursor composition.

According to an advantageous aspect of the present disclosure, the process of manufacturing a microcellular foamed polymeric composition further comprises the step of crosslinking the microcellular foamed polymeric composition.

In the context of the present disclosure, it has been surprisingly found that the step of subjecting the microcellular foamed polymeric composition of the present disclosure to a crosslinking step advantageously impacts the long-term stability of foam microstructure of the foamed polymeric composition.

Without wishing to be bound by theory, it is believed that the crosslinking step has the ability to freeze and strengthen the foam microstructure present in the microcellular foamed polymeric composition.

It has further surprisingly been found that the additional crosslinking step allows using lower amounts of the thermoplastic polymeric material and the physical foaming agent in the process of manufacturing the microcellular foamed polymeric composition.

According to an advantageous aspect of the process, the step of crosslinking the microcellular foamed polymeric composition is performed by exposing the microcellular foamed polymeric composition to radiations selected from the group consisting of ionizing radiations, actinic radiations, and any combinations or mixtures thereof. More advantageously, the radiations for use herein are selected from the group consisting of UV radiations, electron-beam radiations, beta radiations, gamma radiations, x-ray radiations, and any combinations or mixtures thereof.

According to a more advantageous aspect of the process, the step of crosslinking the microcellular foamed polymeric composition is performed by exposing the microcellular foamed polymeric composition to electron-beam radiations.

According to an even more advantageous aspect of the process, the step of crosslinking the microcellular foamed polymeric composition is performed by exposing the microcellular foamed polymeric composition to a cumulative electron-beam dosage in a range from 2 to 30 Mrad, from 4 to 30 Mrad, from 6 to 30 Mrad, from 8 to 30 Mrad, from 10 to 30 Mrad, from 10 to 25 Mrad, or even from 15 to 25 Mrad.

According to an alternatively advantageous aspect of the process, the step of crosslinking the microcellular foamed polymeric composition is performed by using a chemical crosslinking agent, in particular selected from the group consisting of peroxide-based crosslinking agents, epoxy-based crosslinking agents, isocyanate-based crosslinking agents, ionic crosslinking agents, and any combinations or mixtures thereof.

In another aspect, the present disclosure is further directed to a process of stabilizing the microcellular structure of a foamable precursor of a foamed polymeric composition, wherein the foamable precursor comprises:

a) a copolymerizable monomer mixture comprising at least one (meth)acrylate comonomer; and

b) optionally, a physical foaming agent;

wherein the process comprises the step of including into the copolymerizable monomer mixture, at least one copolymerizable macromonomer comprising an oligomeric backbone selected from the group consisting of thermoplastic oligomeric material having a Vicat softening temperature greater than 20°C, when measured according to test method ASTM D1525-09, wherein the copolymerizable macromonomer further comprises a copolymerizable ethylenically unsaturated functional group at one terminal position of the oligomeric backbone, thereby forming a graft (random) copolymerization reaction product.

All the particular and preferred aspects relating to, in particular, the graft (random) copolymerization reaction product, the copolymerizable monomer mixture, the at least one (meth)acrylate comonomer(s), the (meth)acrylate-based (co)polymeric base component, the copolymerizable macromonomer, the oligomeric backbone, the thermoplastic polymeric material, the copolymerizable ethylenically unsaturated functional group present at one terminal position of the oligomeric backbone and the physical foaming agent, which were described hereinabove in the context of the foamable precursor of a microcellular foamed polymeric composition, are fully applicable to the process of manufacturing a microcellular foamed polymeric composition and to the process of stabilizing the microcellular structure of a foamable precursor of a foamed polymeric composition.

Moreover, all the particular and preferred aspects relating to, in particular, the various process steps, which were described hereinabove in the context of the process of manufacturing a microcellular foamed polymeric composition, are fully applicable to the process of stabilizing the microcellular structure of a foamable precursor of a foamed polymeric composition.

According to still another aspect, the present disclosure relates to a microcellular foamed polymeric composition obtained (or obtainable) from the process as described above.

According to an advantageous aspect of the present disclosure, the foamed polymeric composition has an average cell size (diameter) no greater than 200 micrometers, no greater than 180 micrometers, no greater than 160 micrometers, no greater than 140 micrometers, no greater than 120 micrometers, no greater than 100 micrometers, no greater than 80 micrometers, no greater than 70 micrometers, no greater than 60 micrometers, no greater than 50 micrometers, no greater than 40 micrometers, no greater than 30 micrometers, no greater than 20 micrometers, or even no greater than 10 micrometers, when determined by scanning electron microscopy according to ASTM D3576.

According to another advantageous aspect, the foamed polymeric composition of the disclosure has an average cell size (diameter) in a range from 0.5 to 200 micrometers, from 1 to 200 micrometers, from 2 to 200 micrometers, from 2 to 180 micrometers, from 2 to 160 micrometers, from 2 to 140 micrometers, from 2 to 120 micrometers, from 3 to 100 micrometers, from 3 to 80 micrometers, from 3 to 60 micrometers, from 3 to 50 micrometers, from 3 to 40 micrometers, from 5 to 40 micrometers, from 5 to 30 micrometers, from 5 to 20 micrometers, or even from 5 to 15 micrometers, when determined by scanning electron microscopy according to ASTM D3576.

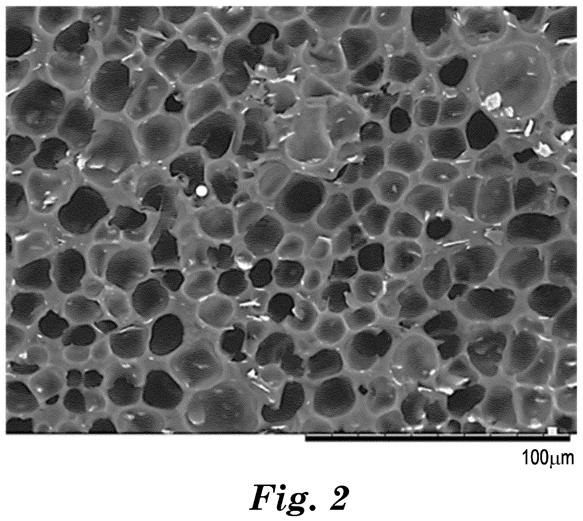

The foam microstructure of an exemplary microcellular foamed polymeric composition according to one aspect of the present disclosure is represented in **FIG. 2,** which is a scanning electron microscope image of a cross section of a layer of such exemplary microcellular foamed polymeric composition.

According to still another advantageous aspect, the foamed polymeric composition has a cell size distribution polydispersity in a range from 1.0 to 2.0, or even from 1.0 to 1.5.

According to yet another advantageous aspect, the foamed polymeric composition has a cell density greater than $1.10^5$ cells/cm$^3$, greater than $1.10^6$ cells/cm$^3$, greater than $1.10^7$ cells/cm$^3$, or even greater than $1.10^8$ cells/cm$^3$ when determined by scanning electron microscopy according to ASTM D3576.

According to yet another advantageous aspect, the foamed polymeric composition has a foam density no greater than 1.0 g/cm$^3$, no greater than 0.8 g/cm$^3$, no greater than 0.6 g/cm$^3$, no greater than 0.5 g/cm$^3$, or even no greater than 0.4 g/cm$^3$, when determined according to ASTM D792.

In a beneficial aspect, the foamed polymeric composition has a maximum compression value greater than 30%, greater than 35%, greater than 40%, greater than 45%, greater than 50%, greater than 55%, greater than 60%, greater than 65%, or even greater than 70%, when determined according to the compression test method described in the experimental section.

In another beneficial aspect, the foamed polymeric composition has an elongation at break value greater than 200%, greater than 250%, greater than 300%, greater than 350%, greater than 400%, greater than 450%, or even greater than 500%, when determined according to the tensile stress relaxation test method described in the experimental section.

In yet another beneficial aspect, the foamed polymeric composition has a Volatile Organic Compound (VOC) value of less than 4000 ppm, less than 3500 ppm, less than 3000 ppm, less than 2500 ppm, less than 2000 ppm, less than 1800 ppm, less than 1700 ppm, less than 1600 ppm, less than 1400 ppm, less than 1200 ppm, or even less than 1000 ppm, when measured by thermal desorption analysis according to test method VDA278.

In yet another beneficial aspect, the foamed polymeric composition has a Volatile Fogging Compound (FOG) value of less than 5000 ppm, less than 4000 ppm, less than 3000 ppm, less than 2500 ppm, less than 2400 ppm, less than 2300 ppm, less than 2200 ppm, less than 2100 ppm, less than 2000 ppm, less than 1900 ppm, or even less than 1800 ppm, when measured by thermal desorption analysis according to test method VDA278.

According to a particular aspect of the disclosure, the foamed polymeric composition is a foamed pressure sensitive adhesive composition.

According to still another aspect, the present disclosure relates to an assembly comprising a microcellular foamed polymeric composition layer as described above.

A foamed polymeric composition layer for use in an assembly has for example a thickness comprised between 100 and 6000 micrometers, between 200 and 4000 micrometers, between 500 and 2000 micrometers, or even between 800 and 1500 micrometers. As will be apparent to those skilled in the art, in the light of the present description, the preferred thickness of the polymeric foam layer will be dependent on the intended application.

According to an advantageous aspect, the microcellular foamed polymeric composition layer for use in an assembly according to the present disclosure has a thickness no greater than 500 micrometers, no greater than 400 micrometers, no greater than 300 micrometers, no greater than 200 micrometers, or even no greater than 100 micrometers.

In a particular aspect, the assembly of the present disclosure is in the form of a multilayer assembly further comprising a second polymeric layer adjacent to the foamed polymeric composition layer.

According to the particular execution wherein the multilayer assembly further comprises a second polymeric layer adjacent to the foamed polymeric composition layer, the multilayer assembly of the present disclosure may advantageously take the form of skin/core type multilayer assembly, wherein the foamed polymeric composition layer is the core layer of the multilayer assembly and the second polymeric layer is the skin layer of the multilayer assembly. This particular execution is commonly referred to as a dual layer polymeric foam assembly. Skin/core type of multilayer assemblies are well known to those skilled in the art.

Multilayer assemblies according to the present disclosure, and in particular dual layer polymeric foam assemblies, are particularly advantageous when compared to single-layer constructions, in that properties/requirements of the overall assembly such as application issues, deforming issues and energy distribution may be addressed by appropriate formulation of the polymeric foam layer (also commonly referred to as the core layer), while other properties such as e.g. adhesion (quick adhesion) can be adjusted by the formulation of the second polymeric layer (also commonly referred to as the skin layer).

In one particular aspect, it may be advantageous for the multilayer assemblies of the present disclosure to further comprise a third polymeric layer which is preferably adjacent to the foamed polymeric layer in the side of the foamed polymeric layer which is opposed to the side of the foamed polymeric layer adjacent to the second polymeric layer, and thereby forming a three-layered multilayer assembly.

Three-layered multilayer assemblies according to one aspect of the disclosure, may advantageously take the form of a skin/core/skin multilayer assembly, wherein the foamed polymeric layer is the core layer of the multilayer assembly, the second polymeric layer is the first skin layer of the multilayer assembly and the third polymeric layer is the second skin layer of the multilayer assembly.

According to one exemplary aspect, the multilayer assembly of the present disclosure is a multilayer pressure sensitive adhesive assembly, wherein the foamed polymeric layer and/or the second polymeric layer and/or the third polymeric layer are layers based on pressure sensitive adhesive compositions.

According to another exemplary aspect, the multilayer assembly of the present disclosure is a multilayer pressure sensitive adhesive assembly, wherein the foamed polymeric layer is not based on a pressure sensitive adhesive composition and the second polymeric layer and the third polymeric layer are layers based on pressure sensitive adhesive compositions.

In the context of the present disclosure, any combinations of pressure sensitive adhesive -based and non-pressure sensitive adhesive-based layers may be comprised in the multilayer assemblies of the present disclosure.

Multilayer assemblies as described herein may be produced according to techniques well known to those skilled in the art, such as e.g. by co-extrusion.

The assemblies of the present disclosure can be coated/applied upon a variety of substrates to produce adhesive-coated articles. The substrates can be flexible or inflexible and be formed of a polymeric material, glass or ceramic material, metal, or combinations thereof. Suitable polymeric substrates include, but are not limited to, polymeric films such as those prepared from polypropylene, polyethylene, polyvinyl chloride, polyester (polyethylene terephthalate or polyethylene naphthalate), polycarbonate, polymethyl(meth)acrylate (PMMA), cellulose acetate, cellulose triacetate, and ethyl cellulose. Foam backings may be used. Examples of other substrates include, but are not limited to, metal such as stainless steel, metal or metal oxide coated polymeric material, metal or metal oxide coated glass, and the like.

The assemblies of the present disclosure may be used in any article conventionally known to use such assemblies such as labels, tapes, signs, covers, marking indices, display components, touch panels, and the like. Flexible backing materials having microreplicated surfaces are also contemplated. The assemblies as described herein may be coated/applied on a substrate using any conventional coating techniques modified as appropriate to the particular substrate. For example, assemblies may be applied/coated to a variety of solid substrates by methods such as roller coating, flow coating, dip coating, spin coating, spray coating knife coating, and die coating. These various methods of coating allow the assemblies to be placed on the substrate at variable thicknesses thus allowing a wider range of use of the assemblies.

The substrate to which the assemblies may be applied is selected depending on the particular application. For example, the assemblies may be applied to sheeting products (e.g., decorative graphics and reflective products), label stock, and tape backings. Additionally, the assemblies may be applied directly onto other substrates such as a metal panel (e.g., automotive panel) or a glass window so that yet another substrate or object can be attached to the panel or window. Accordingly, the assemblies of the present disclosure may find a particular use in the automotive manufacturing industry (e.g. for attachment of exterior trim parts or for weatherstrips) or in the construction industry.

As such, the foamed polymeric compositions and assemblies according to the present disclosure are particularly suited for (industrial) interior applications, more in particular for construction market applications, automotive applications or electronic applications. In the context of automotive applications, the polymeric foamed compositions as described herein may find particular use for adhering e.g. automotive body side mouldings, weather strips or rearview mirrors. Regarding electronic applications, the foamed polymeric compositions as described herein are particularly suitable for the fixation of display panels in mobile hand-held electronic devices.

In yet another aspect, the present disclosure is directed to the use of a foamable precursor of a microcellular foamed polymeric composition or a microcellular foamed polymeric composition or an assembly as described above for industrial applications.

The present disclosure is further directed to the use of a foamable precursor of a microcellular foamed polymeric composition or a microcellular foamed polymeric composition or an assembly as described above for interior applications, in particular for construction market applications and transportation market applications, in particular automotive and aerospace applications, more in particular for taped seal on body, taped seal on door, exterior and interior parts attachment and weather-strip tape applications for the automotive industry.

The present disclosure is further directed to the use of a foamable precursor of a microcellular foamed polymeric composition or a microcellular foamed polymeric composition or an assembly as described above for electronic applications, in particular for the fixation of display panels in mobile hand-held electronic devices.

The present disclosure is further directed to the use of a foamable precursor of a microcellular foamed polymeric composition or a microcellular foamed polymeric composition or an assembly as described above for the bonding to a low surface energy substrate and/or a medium surface energy substrate, in particular automotive clear coats/paints.

In the context of the present disclosure, the expression "low surface energy substrates" is meant to refer to those substrates having a surface energy of less than 34 dynes per centimeter. Included among such materials are polypropylene, polyethylene (e.g., high density polyethylene or HDPE), and blends of polypropylene (e.g. PP/EPDM, TPO).

In the context of the present disclosure, the expression "medium surface energy substrates" is meant to refer to those substrates having a surface energy comprised between 34 and 70 dynes per centimeter, typically between 34 and 60 dynes per centimeter, and more typically between 34 and 50 dynes per centimeter. Included among such materials are polyamide 6 (PA6), acrylonitrile butadiene styrene (ABS), PC/ABS blends, polycarbonate (PC), polyvinylchloride (PVC), polyamide (PA), polyurethanes (PUR), thermoplastic elastomers (TPE), polyoxymethylene (POM), polystyrene (PS), poly(methyl methacrylate) (PMMA), clear coat surfaces, in particular clear coats for vehicles like a car or coated surfaces for industrial applications and composite materials like fiber reinforced plastics.

The surface energy is typically determined from contact angle measurements as described in ASTM D7490-08.

In another aspect, the present disclosure is directed to the use of a copolymerizable macromonomer comprising an oligomeric backbone selected from the group consisting of thermoplastic oligomeric material having a Vicat softening temperature greater than 20°C, when measured according to test method ASTM D1525-09, wherein the copolymerizable macromonomer further comprises a copolymerizable ethylenically unsaturated functional group at one terminal position of the oligomeric backbone, for stabilizing the microcellular structure of a foamable precursor of a foamed polymeric composition, wherein the foamable precursor comprises:

a) a copolymerizable monomer mixture comprising at least one (meth)acrylate comonomer; and
b) optionally, a physical foaming agent.

## EXAMPLES

The present disclosure is further illustrated by the following examples. These examples are merely for illustrative purposes only and are not meant to be limiting on the scope of the appended claims.

**Test methods and procedures:**

Compression test method

The maximum compression values of the foamed polymeric compositions are determined according to the following procedure. A circular specimen with a diameter of 51 mm is compressed in a tensile testing machine (Zwick Z050, Zwick/Roell AG, Ulm, Germany) between two parallel plates until a compression force of 2000 kPa is reached. The gap difference between uncompressed state and the maximum compression force at 2000 kPa is used to calculate the compressibility of the sample. The reduction of the gap size is measured depending on the increasing pressure, which is applied on the sample with a speed of 10 mm/min.

Tensile stress relaxation test method

The elongation at break values of the foamed polymeric compositions are determined according to the following tensile stress relaxation procedure. The samples are analyzed on a tensile testing machine (Zwick Z020, Zwick/Roell AG, Ulm, Germany). For the analysis, samples having a width of 4 mm are prepared for further testing. The samples are elongated with a 300 mm/min elongation speed until the sample brakes. The maximum elongation at break values (in %) are calculated based on a tensile strength vs. elongation diagram.

Thermal desorption analysis of organic emissions according to VDA test method 278

VDA method 278 is a test method used for the determination of organic emissions from non-metallic trim components used to manufacture the interior of motor vehicles (VDA stands for "Verband der Automobilindustrie", the German Association of Automobilists). For the VOC value, the method involves determining the sum of volatile and semi-volatile compounds up to $n\text{-}C_{20}$ which are emitted.
For measuring the VOC values, samples of 30 mg +/- 5 mg are weighed directly into empty glass sample tubes. The volatile and semi-volatile organic compounds are extracted from the samples into the gas stream and are then re-focused onto a secondary trap prior to injection into a Agilent 7890B GC system for analysis. An automated thermal desorber (Markes International Ultra-UNITY system) is hereby used for the VDA 278 testing.
For the VOC analysis, the test method comprises an extraction stage which involves desorbing the sample at 90°C for 30 minutes to extract VOC's up to $n\text{-}C_{20}$. This is followed by a semi-quantitative analysis of each compound as microgram toluene equivalents per gram of sample. The results expressed are the average of 2 measurements per sample. The higher value of the measurements is indicated as the result, as described in the VDA278 test method.

Cell size and cell density

Specimens are immersed in liquid nitrogen for 10 minutes and fractured. The average cell sizes and cell densities are obtained from SEM micrographs (recorded on a Tabletop Microscope TM3030, Hitachi) by image analysis using ImageJ. The dimensions of fifty cells are measured and averaged according to ASTM D3576.
The number average cell area is estimated using the following equation:

$$a = \frac{\sum a_i n_i}{\sum n_i}$$

where: a = average cell area, ai = area of cell i-type and ni = number of cells i-type
The cell diameter is calculated from the average cell area, assuming a circular geometry.
The cell density is calculated using the following equation:

$$N_0 = \left(\frac{n}{A}\right)^{\frac{3}{2}}$$

where: $N_0$ = cell density, n = number of cells in area A and A = area

**Raw materials used:**

In the examples, the following raw materials are used:

**PSM** is a polystyrene-based macromonomer having a weight average molecular weight of about 10.000 g/mol and terminated with a reactive methacrylate group, and which is obtained according to the procedure described in Example M-3 ofU.S. PatentNo. 4,732,808 (Krampe et al.).

**PS** is a polystyrene polymer having a weight average molecular weight of about 350.000 g/mol, commercially available from Sigma-Aldrich.

**2-Ethylhexylacrylate** (2-EHA, C8-acrylate) is an ester of 2-ethylalcohol and acrylic acid which is obtained from BASF AG, Germany.

**Acrylic acid** (AA) is obtained from BASF AG, Germany.

**Isooctyl thioglycolate** (IOTG) is a chain transfer agent and commercially available by Bruno Bock Chemische Fabrik, Germany.

**Omnirad BDK** (2,2-dimethoxy-2-phenylacetophenone) is a UV-initiator and is available from iGm resins, Waalwijk Netherlands.

**Talcum** is a nucleating agent, commercially available from Imerys Talc Belgium, under the commercial name Mistrocell L88.

**$CO_2$** is carbon dioxide gas, used as a physical foaming agent and commercially available from Linde.

**Polymer formation and sample preparation:**

Preparation of the graft copolymers for use in Examples E1 to E3

The polystyrene-based graft copolymers for use in Examples 1 to 3 are made according to the following general procedure. The suitable amount of polystyrene-based macromonomers (PSM) are added to the copolymerizable monomer mixture comprising 2-EHA and AA comonomers and the mixture is bulk polymerized under UV light sealed in ethylene vinyl acetate film pouches as described in U.S. Patent No. 6,294,249 (Hamer et al.). Two sheets of 2.5 mil (51 micrometers) thick ethylene vinyl acetate, commercially available as VA-24 from Pliant Corp. of Evansville, IN, are heat sealed on the lateral edges and the bottom to form a rectangular pouch on a liquid form, fill, and seal machine. The pouch is filled with a pre-adhesive composition having 68 parts 2-EHA, 4.5 parts AA, 18 parts PSM, 0.20 phr of Omnirad BDK, and 0.025 IOTG. The filled packages are then heat sealed at the top in the cross direction through the monomer to form individual pouches measuring 13.4 cm by 4.3 cm by about 0.4 cm thick containing 25 grams of the polymeric composition. The pouches are placed in a water bath that is maintained between 16°C and 32°C and exposed to ultraviolet radiation (supplied by lamps having about 90 percent of the emissions between 300 and 400 nanometers (nm), and a peak emission at 351 nm) at an intensity of 4.55 mW/cm2 for 21 minutes.

Exemplary foamed polymeric compositions

The compositions of the exemplary foamed polymeric compositions (Examples E1 to E3) are listed in Table 1 below (in wt.%).

Table 1: Chemical composition of the exemplary foamed polymeric compositions.

|       | E1   | E2  | E3   |
|-------|------|-----|------|
| 2-EHA | 68   | 60  | 50   |
| AA    | 4.5  | 4.5 | 3.8  |
| PSM   | 18.5 | 29  | 23   |
| PS    | -    | -   | 15.5 |

(continued)

|  | E1 | E2 | E3 |
|---|---|---|---|
| Talcum | 9 | 6.5 | 7.7 |
| $CO_2$ | [a] | [a] | [a] |
| [a] $CO_2$ in supercritical state is added to the reactor until a pressure of 16 MPa is reached. | | | |

Foamed polymeric composition preparation for Examples E1 to E3

The foamed polymeric compositions of Examples E1 to E3 are made according to the following procedure. The suitable amount of the polystyrene-based graft copolymers, talcum and the optional PS polymer are blended in a dynamic kneader (Plastograph EC plus equipped with W50 EHT mixing chamber, Brabender GmbH & Co. KG) at 150°C and 100 rpm for 5 minutes. The compound is heat pressed to a height of about 500 micrometers between two siliconized paper liners at 200°C and 15N for 30 seconds. A sample (dimensions: 5 x 3 cm) with one open and one liner side is placed in a glass vial, which is then placed in a high-pressure reactor (HPR-Series, Supercritical Fluid Technologies Inc.). The reactor is heated to the desired foaming temperature (90°C) via an electrical heating mantle. Using a supercritical fluid pump (SFT-10, Supercritical Fluid Technologies Inc.), CO2 in supercritical state is added to the reactor until a pressure of 16 MPa is reached. After a saturation time of one hour, the reactor is depressurized with a pressure drop rate of about 4 MPa/s, which leads to a temperature decrease of about 40 °C and to the desired foamed polymeric compositions.

**Test Results:**

Cell size and cell density

The cell size (diameter) and cell density of the foamed polymeric compositions of Examples E1 and E2 are determined according to Test method ASTM D3576. The results are described in Table 2 below.

Table 2: Cell size and cell density measurements

| Examples | E1 | E2 |
|---|---|---|
| Cell size (micrometers) | 10 | 10 |
| Cell Density (cells/cm$^3$) | $2.44 \times 10^6$ | $1.92 \times 10^8$ |

As can be seen from the results of Table 2, foamed polymeric compositions according to the present disclosure have very low cell sizes and high cell densities.

Foam density

The foam density of the foamed polymeric compositions of Examples E2 and E3 are determined according to Test method ASTM D792. The results are described in Table 3 below.

Table 3: Foam density measurements

| Examples | E2 | E3 |
|---|---|---|
| Foam Density (g/cm$^3$) | 0.40 | 0.33 |

As can be seen from the results of Table 3, foamed polymeric compositions according to the present disclosure have low foam densities.

Compression

The compression characteristics of the foamed polymeric compositions of Examples E2 and E3 are determined according to the compression test procedure described above. The results are described in Table 4 below.

Table 4: Compression measurements

| Examples | E2 | E3 |
|---|---|---|
| Maximum compression value (%) | 62 | 71 |

As can be seen from the results of Table 4, the foamed polymeric compositions according to the present disclosure have excellent compressibility properties.

VOC and FOG

The VOC and FOG characteristics of the foamed polymeric composition of Example E1 are determined according to the VDA 278 test method described above. The results are described in Table 5 below.

Table 5: VOC and FOG measurements

| Example | E1 |
|---|---|
| VDA 278 VOC (ppm) | 1000 |
| VDA 278 FOG (ppm) | 1500 |

As can be seen from the results of Table 5, the foamed polymeric compositions according to the present disclosure have good VOC and FOG characteristics.

**Claims**

1. A foamable precursor of a microcellular foamed polymeric composition, wherein the foamable precursor comprises:

a) the graft copolymerization reaction product of a copolymerizable monomer mixture comprising:

i. at least one (meth)acrylate comonomer; and
ii. at least one copolymerizable macromonomer comprising an oligomeric backbone selected from the group consisting of thermoplastic oligomeric material having a Vicat softening temperature greater than 20°C, when measured according to test method ASTM D1525-09, wherein the copolymerizable macromonomer further comprises a copolymerizable ethylenically unsaturated functional group at one terminal position of the oligomeric backbone; and

b) optionally, a physical foaming agent.

2. A precursor according to claim 1, wherein the copolymerizable macromonomer has the following general formula:

$$X-(Y)_n-Z$$

wherein:

X is an ethylenically unsaturated functional group copolymerizable with the at least one (meth)acrylate comonomer;
Y is a divalent linking group;
n is 0 or 1; and
Z is an oligomeric moiety.

3. A precursor according to any of claim 1 or 2, wherein the thermoplastic polymeric material has a Vicat softening temperature greater than 25°C, greater than 30°C, greater than 40°C, greater than 50°C, greater than 60°C, greater than 70°C, greater than 80°C, greater than 90°C, greater than 100°C, or even greater than 110°C, when measured according to test method ASTM D1525-09.

4. A precursor according to any of the preceding claims, wherein the thermoplastic polymeric material is selected from the group consisting of polystyrenes, polymethacrylics, alkylene-vinyl acetate copolymers, polycarbonates, rubber-based elastomeric materials, rubber-based non-elastomeric materials, polyacrylonitriles, polyvinyl chlorides, polyvinyl acetates, polyvinyl butyrates, polyvinyl alcohols, acrylonitrile butadiene styrene, alkylene-acrylic acid copolymers, polybutylene terephthalate, polyurethanes, polyesters, polyethers, polyamides, polylactides, polyolefins, polyphenylene oxides, styrenic block copolymers, polyetherimides, epoxy-based polymers, fluorinated polymers, cellulose-based polymers, starch, and any combinations or mixtures thereof.

5. A precursor according to any of the preceding claims, wherein the thermoplastic polymeric material is selected from the group consisting of polystyrenes, polymethylmethacrylate, ethylene-vinyl acetate copolymers, and any combinations or mixtures thereof.

6. A precursor according to any of the preceding claims, wherein the physical foaming agent is selected from the group consisting of carbon dioxide, nitrogen, SF6, nitrous oxide, perfluorinated fluids, hydrofluorocarbons, hydrochlorofluorocarbons, hydrocarbons, argon, helium, noble gases, air, and any combinations or mixtures thereof.

7. A precursor according to any of the preceding claims, wherein the physical foaming agent is selected to comprise carbon dioxide.

8. A precursor according to any of the preceding claims, wherein the physical foaming agent is present in the precursor in supercritical conditions, in particular in pressure and temperature conditions greater than the supercritical pressure ($P_c$) and the supercritical temperature ($T_c$) conditions for the physical foaming agent.

9. A precursor according to any of the preceding claims, wherein the copolymerizable monomer mixture comprises:

   a) from 50 to 98 wt.%, from 55 to 95 wt.%, from 60 to 95 wt.%, from 65 to 95 wt.%, from 70 to 95 wt.%, from 70 to 90 wt.%, from 75 to 90 wt.%, or even from 80 to 90 wt.%, of the at least one (meth)acrylate comonomer(s); and
   b) from 1 to 50 wt.%, from 2 to 50 wt.%, from 2 to 45 wt.%, from 5 to 45 wt.%, from 5 to 40 wt.%, from 5 to 35 wt.%, from 5 to 30 wt.%, from 5 to 25 wt.%, from 5 to 20 wt.%, from 5 to 15 wt.%, or even from 8 to 15 wt.%, of the at least one copolymerizable macromonomer(s);

   wherein the weight percentages are based on the total weight of the copolymerizable monomer mixture.

10. A precursor according to any of the preceding claims, which comprises:

    a) from 50 to 99 wt.%, from 50 to 98 wt.%, from 55 to 95 wt.%, from 60 to 95 wt.%, from 65 to 95 wt.%, from 70 to 95 wt.%, from 75 to 95 wt.%, from 80 to 95 wt.%, or even from 85 to 95 wt.%, of the graft copolymerization reaction product;
    b) optionally, from 0 to 5 wt.%, from 0.01 to 5 wt.%, from 0.05 to 5 wt.%, from 0.1 to 5 wt.%, from 0.1 to 4 wt.%, from 0.1 to 3 wt.%, from 0.2 to 3 wt.%, from 0.5 to 3 wt.%, from 0.5 to 2.5 wt.%, or even from 0.5 to 2 wt.%, of the physical foaming agent;
    c) optionally, from 0 to 20 wt.%, from 0.5 to 15 wt.%, from 0.5 to 10 wt.%, from 1 to 10 wt.%, from 1 to 8 wt.%, from 2 to 8 wt.%, or even from 2 to 6 wt.%, of a nucleating agent; and
    d) optionally, from 0 to 50 wt.%, from 1 to 50 wt.%, from 5 to 50 wt.%, from 5 to 45 wt.%, from 10 to 45 wt.%, or even from 15 to 45 wt.%, of a thermoplastic polymeric material;

    wherein the weight percentages are based on the total weight of the foamable precursor.

11. A process of manufacturing a microcellular foamed polymeric composition, comprising the steps of:

    a) providing a foamable precursor of a microcellular foamed polymeric composition as described in any of the preceding claims;
    b) optionally, providing a physical foaming agent as described in any of the preceding claims;
    c) allowing the physical foaming agent to foam the foamable precursor of a microcellular foamed polymeric composition, thereby obtaining a microcellular foamed polymeric composition; and
    d) optionally, crosslinking the microcellular foamed polymeric composition.

**12.** A process according to claim 11, comprising the steps of:

a) providing a mixing apparatus;

b) incorporating and mixing the foamable precursor composition in the mixing apparatus;

c) optionally, degassing the foamable precursor composition, in particular while the foamable precursor composition is still in the mixing apparatus;

d) optionally, exposing the foamable precursor composition to increased pressure and temperature conditions, in particular to pressure and temperature conditions greater than the supercritical pressure ($P_c$) and the supercritical temperature ($T_c$) conditions for the physical foaming agent;

e) optionally, providing the physical foaming agent into the mixing apparatus;

f) mixing the foamable precursor composition and the physical foaming agent (provided in supercritical conditions) in the mixing apparatus;

g) optionally, reducing the pressure and/or temperature conditions of the foamable precursor composition, whereby the pressure and temperature conditions are still greater than the supercritical pressure ($P_c$) and the supercritical temperature ($T_c$) conditions for the physical foaming agent;

h) allowing the physical foaming agent to foam the foamable precursor of a microcellular foamed polymeric composition, in particular by exposing the foamable precursor composition to a reduced pressure (in particular atmospheric pressure), whereby the physical foaming agent expands resulting in foaming of the foamable precursor of the microcellular foamed polymeric composition, and thereby obtaining a microcellular foamed polymeric composition; and

i) optionally, crosslinking the microcellular foamed polymeric composition.

**13.** A foamed polymeric composition obtained from the process according to any of claim 11 or 12.

**14.** A foamed polymeric composition according to claim 13, which has an average cell size no greater than 200 micrometers, no greater than 180 micrometers, no greater than 160 micrometers, no greater than 140 micrometers, no greater than 120 micrometers, no greater than 100 micrometers, no greater than 80 micrometers, no greater than 70 micrometers, no greater than 60 micrometers, no greater than 50 micrometers, no greater than 40 micrometers, no greater than 30 micrometers, no greater than 20 micrometers, or even no greater than 10 micrometers, when determined by scanning electron microscopy according to ASTM D3576.

**15.** Use of a foamed polymeric composition according to any of claim 13 or 14 for industrial applications, in particular for interior applications, more in particular for construction market applications, automotive applications or electronic applications.

Fig. 1

Fig. 2

Europäisches
Patentamt

European
Patent Office

Office européen
des brevets

# EUROPEAN SEARCH REPORT

Application Number

EP 20 20 4878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 034 576 A1 (3M INNOVATIVE PROPERTIES CO [US]) 22 June 2016 (2016-06-22) * paragraphs [0001], [0012] - [0014], [0016], [0056], [0061] * ----- | 1-15 | INV. C08J9/12 C08F290/04 C09J7/26 C09J7/38 C09J133/06 C09J151/06 |
| X | EP 3 587 529 A1 (3M INNOVATIVE PROPERTIES CO [US]) 1 January 2020 (2020-01-01) * paragraphs [0001], [0029], [0032] - [0041], [0046], [0055], [0059], [0093] - [0095] * ----- | 1-15 | |
| X,D | US 4 732 808 A (KRAMPE STEPHEN E [US] ET AL) 22 March 1988 (1988-03-22) * column 1, lines 12-50 * * column 3, lines 21-47 * * column 15, lines 28-40 * ----- | 1-5,9,10 | |

TECHNICAL FIELDS
SEARCHED    (IPC)

C08J
C09J
C08F

The present search report has been drawn up for all claims

| Place of search | Date of completion of the search | Examiner |
|---|---|---|
| The Hague | 31 March 2021 | Mayer, Anne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 20 4878

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2021

| Patent document cited in search report | | Publication date | Patent family member(s) | | Publication date |
|---|---|---|---|---|---|
| EP 3034576 | A1 | 22-06-2016 | NONE | | |
| EP 3587529 | A1 | 01-01-2020 | EP | 3587529 A1 | 01-01-2020 |
| | | | WO | 2019244109 A2 | 26-12-2019 |
| US 4732808 | A | 22-03-1988 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0144400 A, Yang
- US 2016145406 A1, Bieber
- US 20110281964 A1, Zmarsly

- US 4732808 A, Krampe
- US 6294249 B, Hamer